# EUROPEAN PATENT SPECIFICATION

(11) **EP 3 769 891 B1**
(45) Date of publication and mention of the grant of the patent: **21.08.2024**
(21) Application number: 19770721.9
(22) Date of filing: 28.01.2019
(51) Int. Cl.: B23K 9/095, B23K 9/12

(54) **ARC WELDING METHOD, ARC WELDING SYSTEM, AND CONTROL DEVICE FOR WELDING POWER SUPPLY DEVICE**
LICHTBOGENSCHWEISSVERFAHREN, LICHTBOGENSCHWEISSSYSTEM UND STEUERUNGSVORRICHTUNG FÜR EINE SCHWEISSSTROMVERSORGUNGSVORRICHTUNG
PROCÉDÉ DE SOUDAGE À L'ARC, SYSTÈME DE SOUDAGE À L'ARC ET DISPOSITIF DE COMMANDE POUR DISPOSITIF D'ALIMENTATION EN ÉNERGIE DE SOUDAGE

(30) Priority: 20.03.2018 JP 2018053533
(43) Date of publication of application: 27.01.2021
(73) Proprietor: Panasonic Intellectual Property Management Co., Ltd., Osaka-shi, Osaka 540-6207 (JP)
(72) Inventor: KOMATSU Takamichi, Osaka-shi, Osaka 540-6207 (JP); MATSUOKA Noriyuki, Osaka-shi, Osaka 540-6207 (JP); KOWA Masaru, Osaka-shi, Osaka 540-6207 (JP); SATO Kimiya, Osaka-shi, Osaka 540-6207 (JP)
(74) Representative: Vigand, Philippe
(86) International application number: PCT/JP2019/002783
(87) International publication number: WO 2019/181209

(56) References cited:
- JP-A- 2011 152 575
- JP-A- 2011 161 453
- JP-A- 2011 212 707
- JP-A- S60 206 566

## Description

### [Background Art]

The present invention relates to an arc welding method, an arc welding system, and a controller of a welding power source.

An arc welding system roughly includes: a welding torch to which a consumable electrode (wire) is supplied; a welding power source that applies a welding current to the welding torch; a manipulator that moves the welding torch to a welding position; and a robot controller that controls the manipulator.

Patent Literature 1 proposes a welding robot that includes: a robot main body that moves a welding torch, which is used in a gas shield arc welding device, relative to a welding base material (a workpiece); and a controller that controls a welding operation of the robot main body, wherein the welding robot is configured to generate an arc discharge between an electrode of the welding torch and the welding base material while supplying a shield gas to a molten portion of the base material (a molten pool of the base material).

The welding robot includes a controller that includes an intermittent welding means that generates an arc discharge for only a predetermined time while stopping the welding torch to melt the welding base material, and, after the predetermined time has passed, stops the arc discharge and moves the welding torch to a position on the outer periphery of the molten portion, the position being where an arc discharge is generated again, so that it is possible to set welding conditions with strict accuracy and weld a thin plate without requiring a welding base material that has a high shape accuracy.

In the specification of the present application, the term "stitch pulse welding process" encompasses not only a welding process as described above in which welding is performed by intermittently generating an arc discharge in synchronization with intermittent movement of the welding torch, but also a welding process in which welding is performed by intermittently generating an arc discharge while continuously moving the welding torch. The welding method based on the stitch pulse welding process is a welding method, with which it is possible to suppress a thermal influence on the welding base material by controlling welding heat and cooling, and in which a welding-current starting step, a welding-current applying step, a welding-current ending step, and a welding-current suspending step of an arc current that flows between the consumable electrode and the welding base material are repeatedly carried out in series every predetermined period, as a result of which, the amount of welding distortion can be reduced, and a bead appearance with a beautiful fish scale pattern can be obtained.

Also, a conventional continuous welding process that is different from the stitch pulse welding process is referred to as non-stitch pulse welding process. The non-stitch pulse welding process is advantageous in that welding can be performed at a sufficient welding strength. However, the non-stitch pulse welding process is problematic in that it is difficult to adjust the amount of heat when welding, for example, thin plates or the like, and pits or undercuts that cause a reduction in strength are also likely to occur.

Patent Literature 2 proposes an arc welding method for obtaining a bead appearance with a further beautiful fish scale pattern by using a stitch pulse welding process, specifically, an arc welding method improved to form welding beads at equal intervals from a welding start point to a welding end point.

The arc welding method includes: a first step of calculating the distance of a welding section where stitch pulse welding is performed; a second step of calculating the number of divisions of the stitch pulse welding by dividing the distance calculated in the first step by a predetermined moving pitch of the stitch pulse welding; and a third step of calculating a corrected moving pitch by dividing the distance calculated in the first step by the number of divisions calculated in the second step, wherein the stitch pulse welding is performed at the corrected moving pitch calculated in the third step, thereby forming welding beads at equal intervals in the welding section that includes a welding start point and a welding end point.

### [Citation List]

### [Patent Literatures]

[PTL 1] Laid-Open Patent Publication No. H06-55268
[PTL 2] Laid-Open Patent Publication No. 2014-87818

### [Summary of Invention]

### [Technical Problem]

As described above, the stitch pulse welding method is a welding method, with which it is possible to obtain a welding appearance with a beautiful fish scale pattern while suppressing a thermal influence on the welding base material. However, the stitch pulse welding method is not a versatile welding method that can be used to weld all types of workpieces. Depending on the workpiece to be welded, the welding process is often performed by partially switching between the stitch pulse welding method and the non-stitch pulse welding method.

Also, in the case where the non-stitch pulse welding method is used, instead of simply welding a weld portion linearly, a weaving technique called spiral weaving may be used in combination in order to obtain a bead appearance similar to that obtained through the stitch pulse welding method,.

In the case where the welding process is switched between a welding process that uses the stitch pulse welding method and a welding process that uses the non-stitch pulse welding method, the robot controller controls the movement of the welding torch in accordance with predetermined teaching information, and makes a request to the welding power source as needed, to switch from the stitch pulse welding process to the non-stitch pulse welding process, or switch from the non-stitch pulse welding process to the stitch pulse welding process.

However, if the welding power source applies a welding current that corresponds to the non-stitch pulse welding process to the welding torch immediately after receiving the switch request for switching the stitch pulse welding process to the non-stitch pulse welding process output from the robot controller, the bead shape formed at the time of switching may be discontinuous, impairing the bead appearance, or a welding failure such as pits may occur.

The stitch pulse welding process is a process in which welding is performed by repeatedly applying a welding current to the welding torch and stopping the application of the welding current to the welding torch every predetermined period. Accordingly, the bead shape formed at the time of switching may vary not only between when switching is performed while the welding current is applied to the welding torch and when switching is performed while the application of the welding current is stopped, but also depending on whether the non-stitch pulse welding process is implemented with or without a weaving operation.

### [Solution to Problem]

An aspect of the present invention relates to an arc welding method. The arc welding method includes: implementing a stitch pulse welding process; and implementing a non-stitch pulse welding process, wherein upon switching from the stitch pulse welding process to the non-stitch pulse welding process, a switch timing from the stitch pulse welding process to the non-stitch pulse welding process is modified based upon whether the non-stitch pulse welding process is implemented with or without a weaving operation.

Another aspect of the present invention relates to an arc welding system including: a welding torch to which a consumable electrode is supplied; a welding power source that applies a welding current to the welding torch; a manipulator that moves the welding torch to a welding position; and a robot controller that controls the manipulator. The robot controller is configured to control the movement of the welding torch in accordance with a predetermined teaching information, and to output a switch request for switching from a stitch pulse welding process to a non-stitch pulse welding process, or a switch request for switching from the non-stitch pulse welding process to the stitch pulse welding process, to the welding power source, and the welding power source is configured, when receiving, from the robot controller, the switch request for switching from the stitch pulse welding process to the non-stitch pulse welding process from the robot controller, to modify a switch timing from the stitch pulse welding process to the non-stitch pulse welding process based upon whether the non-stitch pulse welding process is implemented with or without a weaving operation.

### [Advantageous Effects of Invention]

According to the present invention, it is possible to provide an arc welding method, an arc welding system, and a controller of a welding power source, with which switching from a stitch pulse welding process to a non-stitch pulse welding process can be performed smoothly without impairing the appearance of the bead shape or causing a welding failure irrespective of the timing at which a switch request for switching from the stitch pulse welding process to the non-stitch pulse welding process is made.

### [Brief Description of Drawings]

[FIG 1] FIG 1 is a schematic diagram of an arc welding system according to an embodiment of the present invention.
[FIG 2] FIG 2(a) is a timing chart showing a current waveform in a stitch pulse welding process, and FIG 2(b) is a plan view showing a bead shape.
[FIG 3] FIG 3 is a flowchart of robot control according to the embodiment.
[FIG 4] FIG 4 is a flowchart of welding control according to the embodiment.
[FIG 5] FIGS. 5(a) and 5(b) are plan views showing timing charts illustrating first and second specific examples of a bead shape and a current waveform when switching is performed from a stitch pulse welding process to a non-stitch pulse welding process (in the case where the non-stitch pulse welding process is implemented without a weaving operation).
[FIG 6] FIGS. 6(a) and 6(b) are plan views showing timing charts illustrating first and second specific examples of a bead shape and a current waveform when switching is performed from a stitch pulse welding process to a non-stitch pulse welding process (in the case where the non-stitch pulse welding process is implemented with a weaving operation).

### [Description of Embodiment]

An embodiment of an arc welding method, an arc welding system, and a controller of a welding power source to which the present invention is applied will be described below with reference to the drawings.

### [Basic Aspect of Arc Welding Method]

An arc welding method according to an embodiment of the present invention includes: implementing a stitch pulse welding process; and implementing a non-stitch pulse welding process, and is configured such that upon switching from the stitch pulse welding process to the non-stitch pulse welding process, a switch timing from the stitch pulse welding process to the non-stitch pulse welding process is modified based upon whether the non-stitch pulse welding process is implemented with or without a weaving operation of a welding torch.

If switching is performed to the non-stitch pulse welding process immediately after a switch request for switching from the stitch pulse welding process to the non-stitch pulse welding process is made, the bead shape formed in the stitch pulse welding process may vary, impairing the bead appearance, or the welding strength may vary significantly.

However, with the configuration described above, it is possible to, in the case where the non-stitch pulse welding process is implemented with the weaving operation, perform a process aimed to suppress a significant variation in the welding strength caused by a welding failure, rather than to suppress a variation in the bead shape. Also, it is possible to, in the case where the non-stitch pulse welding process is implemented without the weaving operation, perform a process aimed to suppress not only a significant variation in the welding strength but also to suppress a variation in the bead shape.

The stitch pulse welding process includes a welding-current starting step, a welding-current applying step, a welding-current ending step, and a welding-current suspending step, which are repeatedly carried out in series every predetermined period. Also, the arc welding method of the present embodiment is configured such that i) if a switch request for switching the stitch pulse welding process to the non-stitch pulse welding process with the weaving operation is made during the welding-current starting step or the welding-current applying step, the welding-current ending step is carried out immediately, and then after a predetermined time has passed, the non-stitch pulse welding process is implemented, and ii) if the switch request for switching the stitch pulse welding process to the non-stitch pulse welding process with the weaving operation is made during the welding-current ending step or the welding-current suspending step, at least the welding-current ending step is completed, and then after a predetermined time has passed, the non-stitch pulse welding process is implemented.

Immediately after the switch request for switching the stitch pulse welding process to the non-stitch pulse welding process with the weaving operation is made, the welding torch performs the weaving operation, and thus it is necessary to quickly end the stitch pulse welding process in response thereto, and switch to the welding conditions that correspond to the non-stitch pulse welding process.

For this reason, in the stitch pulse welding process at the time when the switch request is made, i) if the welding-current starting step or the welding-current applying step is being carried out, switching is quickly made to the welding-current ending step, and then after a predetermined time has passed, the non-stitch pulse welding process is started; and ii) if the welding-current ending step or the welding-current suspending step is being carried out, at least the welding-current ending step is completed, and then after a predetermined time has passed, the non-stitch pulse welding process is started.

Also, the arc welding method of the present embodiment is configured such that iii) if a switch request for switching the stitch pulse welding process to the non-stitch pulse welding process without the weaving operation is made during the welding-current applying step, the subsequent welding-current ending step is completed, and then after a predetermined time has passed, the non-stitch pulse welding process is implemented, and iv) if a switch request for switching the stitch pulse welding process to the non-stitch pulse welding process without the weaving operation is made during the welding-current starting step, the welding-current ending step, or the welding-current suspending step, the subsequent series of the welding-current starting step, the welding-current applying step, the welding-current ending step, and the welding-current suspending step are completed, and then after a predetermined time has passed, the non-stitch pulse welding process is implemented.

If the switch request for switching the stitch pulse welding process to the non-stitch pulse welding process without the weaving operation is made, the welding torch keeps moving along a welding line even after the switch request has been made. In this case, if switching is immediately performed to welding conditions that correspond to the non-stitch pulse welding process, such a rapid change of the welding conditions may impair the appearance of the bead shape or cause a welding failure.

Even in such a case, in the stitch pulse welding process at the time when the switch request is made, if the welding-current applying step is being carried out, the subsequent welding-current ending step is completed, then after a predetermined time has passed, the non-stitch pulse welding process is started. By doing so, a good bead shape can be obtained through the non-stitch pulse welding process, without impairing the appearance of the bead shape formed through the stitch pulse welding process.

Also, in the stitch pulse welding process at the time when the switch request is made, if any one of the welding-current starting step, the welding-current ending step, and the welding-current suspending step is being carried out, the subsequent steps of the stitch pulse welding process are completed, then after a predetermined time has passed, the non-stitch pulse welding process is started. By doing so, as above, a good bead shape can be obtained through the non-stitch pulse welding process, without impairing the appearance of the bead shape formed through the stitch pulse welding process.

### [Configuration of Arc Welding System]

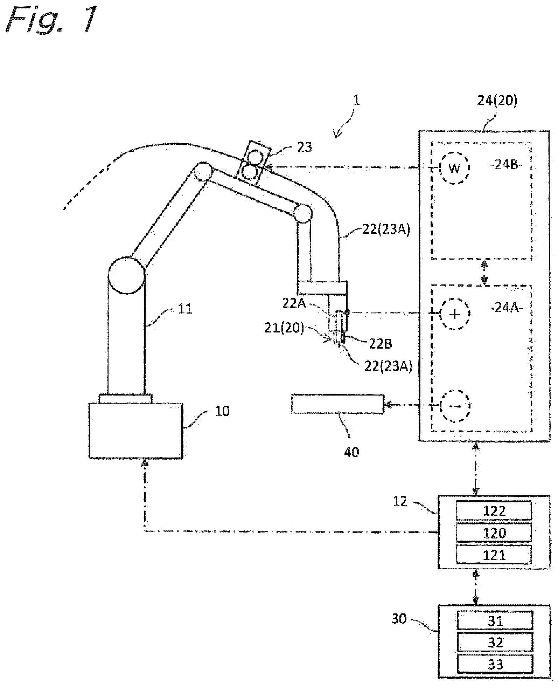

As shown in FIG 1, an arc welding system 1 according to the present embodiment roughly includes a robot device 10 and a welding device 20.

The robot device 10 includes: a manipulator 11 equipped with a multi-articulated arm that includes a plurality of links that are pivotally connected via joints; a robot controller 12 that performs control to move a welding torch 21, which is attached to the tip end of the manipulator 11, to an intended welding position (along a programmed welding path) by controlling the joints and the like of the manipulator 11; a teach pendant 30 (remote controller) that is capable of performing communication with the robot controller 12; and the like.

The welding device 20 includes: a welding torch 21 that is fixed to the distal link of the manipulator 11; a wire supply unit 23 that is fixed to the manipulator 11 and supplies a welding wire 23A, which is a consumable electrode 22, to the welding torch 21; a welding power source 24 that applies a welding current to the welding torch 21 to melt the consumable electrode 22; and the like.

A contact tip 22A and a gas nozzle 22B are attached to the distal end of the welding torch 21. The contact tip 22A is a cylindrical conductor for guiding the welding wire 23A, and the welding wire 23A functions as the consumable electrode 22 for welding by being molten by the welding current applied to the contact tip 22A from the welding power source 24.

The gas nozzle 22B is provided to surround the contact tip 22A, and supplies a shield gas such as argon to the welding portion. Although not shown in FIG 1, the gas nozzle 22B is connected to a gas supply tube through which the shield gas is supplied via a regulator from a gas cylinder that is filled with the shield gas.

The welding power source 24 includes: a high-voltage generating circuit 24A that generates a welding voltage that is applied to the contact tip 22A; and a power source controller 24B that controls the high-voltage generating circuit 24A. The power source controller 24B includes an operation circuit that includes a CPU and a memory, and generates a desired high voltage at a desired timing based on an instruction from the robot controller 12, and adjusts the amount of supply (or the rate of supply) of the welding wire 23Ato the contact tip 22A by controlling the wire supply unit 23.

An arc discharge is generated when the high voltage generated by the high-voltage generating circuit 24A is applied between the welding torch 21 and a welding target 40, as a result of which, the welding wire 23A melts, and the welding target 40 is welded. At this time, the welding target 40 has a ground potential.

The wire supply unit 23 includes a guide roller-equipped supply motor and an encoder that detects the amount of supply of the welding wire 23A by the supply motor, and the power source controller 24B controls the wire supply unit 23 such that the required amount of the welding wire 23A is supplied to the welding torch 21.

The robot controller 12 includes: an operation unit 120 that includes a CPU and a memory, and functions as a manipulator control unit and a welding condition instruction unit; a communication interface circuit 121 for performing communication with the teach pendant 30; a communication interface circuit 122 for performing communication with the power source controller 24B; and the like. The robot controller 12 controls the operation of the manipulator 11 based on an instruction from the teach pendant 30 (functioning as the manipulator control unit), and provides an instruction indicating welding conditions such as welding current to the power source controller 24B (functioning as the welding condition instruction unit).

The teach pendant 30 includes: a communication interface circuit 31 for performing communication with the robot controller 12; a display unit 32 for displaying various types of information; a data setting unit 33 for setting welding conditions and the like; and the like.

An operator or an instructor inputs teaching data such as the operation parameters of the manipulator 11 and the welding conditions of the welding device 20 by operating the data setting unit 33 of the teach pendant 30. A collection of teaching data (teaching information) that has been input is transmitted from the teach pendant 30 to the robot controller 12 via the communication interface circuit 31, and stored in the memory of the robot controller 12.

The robot controller 12 carries out a computation process required for the operation unit 120 in accordance with the teaching information read out from the memory before a welding process is performed, and outputs, to the manipulator 11, an instruction signal (hereinafter, also referred to as "operation instruction") that instructs the manipulator 11 to carry out necessary operations, and also outputs, to the power source controller 24B, an instruction signal (hereinafter, also referred to as "condition instruction") that corresponds to the welding conditions. As a result of the robot controller 12 updating and outputting the instruction signals required for the manipulator 11 and the power source controller 24B as appropriate according to the progress of the welding process, the manipulator 11 and the welding power source 24 are controlled in accordance with the teaching data.

The operation instruction output from the robot controller 12 to the manipulator 11 includes signals that indicate the rotation direction and the rotation speed for each joint required to move the welding torch 21 along a predetermined movement path and a predetermined speed. On the other hand, the condition instruction output from the robot controller 12 to the power source controller 24B, which is also referred to as "welding instruction", includes a stitch signal that designates either the stitch pulse welding process or the non-stitch pulse welding process, and, if the non-stitch pulse welding process is designated, a weaving signal that designates whether the non-stitch pulse welding process is implemented with or without a weaving operation of the welding torch 21, and parameter signals that indicate electrical parameters, such as the welding current and the voltage, that correspond to the designated welding process.

### [Detailed Operations of Robot Controller and Welding Power Source]

The robot controller 12 controls the manipulator 11 in accordance with the predetermined teaching information such that the welding torch 21 moves along the welding line at a predetermined speed, and outputs, in accordance with the teaching information, either a signal for requesting to switch the stitch pulse welding process to the non-stitch pulse welding process to the welding power source 24 or a signal for requesting to switch the non-stitch pulse welding process to the stitch pulse welding process (hereinafter, these signals will also be referred to as "switch requests").

As already explained above, the stitch pulse welding process refers to a welding process in which welding is performed intermittently by intermittently generating an arc discharge irrespective of the moving state of the welding torch 21, or in other words, a cycle of generating an arc discharge for only a predetermined time to melt the welding wire 23A that is the consumable electrode and interrupting the arc discharge is repeatedly performed.

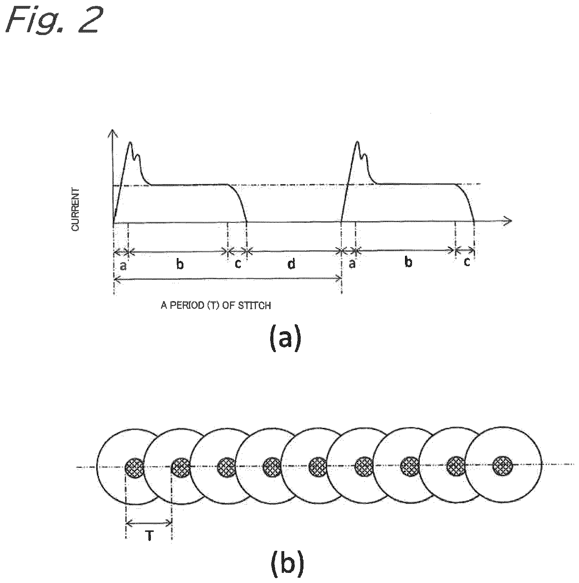

As shown in FIG 2(a), the stitch pulse welding process is a process in which a) a welding-current starting step, b) a welding-current applying step, c) a welding-current ending step, and d) a welding-current suspending step are repeatedly carried out every predetermined period T.

The welding-current starting step (a) is a step of applying a voltage to the welding torch 21 positioned at a welding start position by the manipulator 11, and generating an arc discharge between the consumable electrode 22 and the welding target 40 so as to start welding. After the voltage has been applied, an arc discharge is generated between the consumable electrode 22 and the welding target 40, as a result of which, the current value increases sharply, the welding wire 23A that constitutes the consumable electrode 22 melts, and a molten pool is formed on the welding target 40.

The welding-current applying step (b) is a step of performing welding by supplying the welding wire 23Ato the molten pool such that the arc discharge is continued for a predetermined period of time, the welding-current ending step (c) is a step of stopping the supply of the welding wire 23A to the molten pool and stopping the short circuit state between the consumable electrode 22 and the welding target 40 to end the welding current, and the welding-current suspending step (d) is a step of maintaining a state in which the welding current is suspended for a period of time required to move the welding torch 21 to the next welding target position.

FIG 2(b) shows a fish scale-like bead shape formed through the above-described steps repeatedly performed every predetermined period T.

The non-stitch pulse welding process is a process in which a welding current is constantly applied, and the welding-current applying step (b) is performed continuously for a period of time from when an arc discharge is formed in the welding-current starting step (a) to when welding ends.

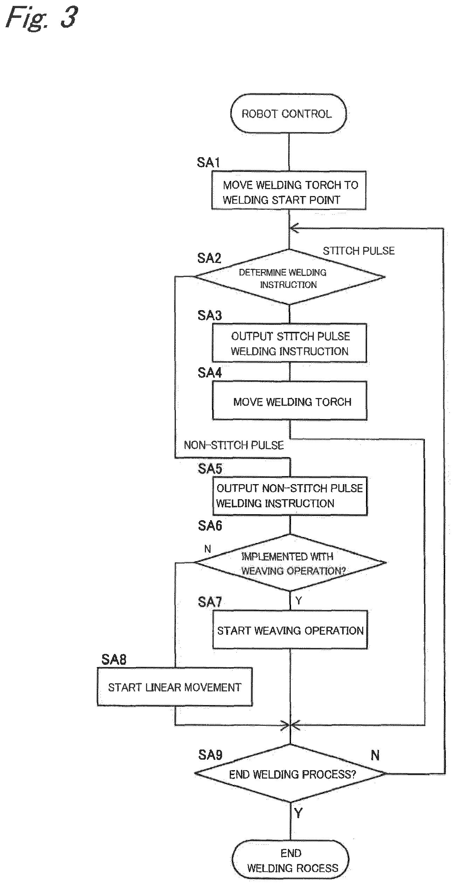

As shown in the flowchart of robot control shown in FIG 3, when the welding process starts, the robot controller 12 first moves the welding torch 21 to a welding start point in accordance with teaching information (SA1), and determines whether the stitch pulse welding process or the non-stitch pulse welding process has been designated by the condition instruction (SA2). If it is determined that the stitch pulse welding process has been designated, the robot controller 12 outputs a stitch pulse welding instruction to the power source controller 24B (hereinafter, also referred to simply as "the welding power source 24") of the welding power source 24 (SA3). If it is determined that the non-stitch pulse welding has been designated, the robot controller 12 outputs a non-stitch pulse welding instruction to the welding power source 24 (SA5).

After outputting the stitch pulse welding instruction (SA3), the robot controller 12 moves the welding torch 21 along a welding line (a pre-programmed welding path) at a predetermined speed by a predetermined distance in accordance with the teaching information (SA4). The processing from step SA2 to step SA4 is repeated until the welding process ends (SA9).

If the robot controller 12 determines, in step SA2, in accordance with the teaching information, that the stitch pulse welding is switched to the non-stitch pulse welding (SA2), the robot controller 12 outputs, to the welding power source 24, a non-stitch pulse welding instruction indicating whether a spiral weaving operation of the welding torch 21 needs to be implemented (SA5), determines whether the non-stitch pulse welding process is implemented with the spiral weaving operation (SA6), and starts the weaving operation if the spiral weaving operation is necessary (SA7) and starts a linear movement if the spiral weaving operation is unnecessary (SA8).

The robot controller 12 determines whether the predetermined welding process has ended (SA9). If it is determined that the welding process has not ended, the processing returns to step SA2, where the same process is repeated. If it is determined that the welding process has ended, the robot controller 12 outputs a welding end instruction to the welding power source 24, and the welding operation ends.

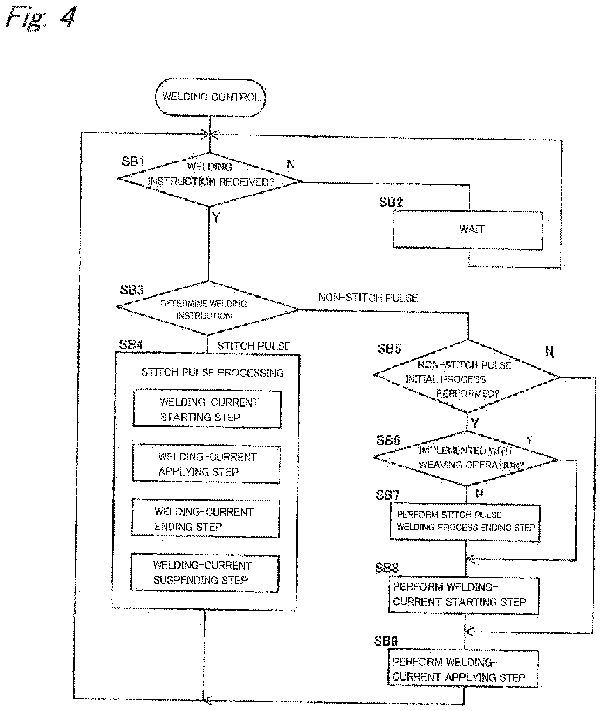

As shown in the flowchart of welding control shown in FIG 4, the welding power source 24 suspends the welding current and waits (SB2) for a welding instruction to be transmitted from the robot controller 12 (SB 1, N). If a welding instruction is transmitted (SB 1, Y), it is determined whether the welding instruction is a stitch pulse welding instruction or a non-stitch pulse welding instruction (SB3). If it is determined that the welding instruction is a stitch pulse welding, the corresponding welding conditions are stored in a welding condition storage, and a) the welding-current starting step, b) the welding-current applying step, c) the welding-current ending step, and d) the welding-current suspending step shown in FIG 2(a) are carried out according to a predetermined time schedule (SB4). After step SB4, the processing returns to step SB1, where the welding power source 24 repeats a series of steps SB1, SB3, and SB4 until the predetermined stitch pulse welding process is completed. At this time, the welding power source 24 carries out the sub-steps of step SB4 based on the welding conditions stored in the welding condition storage.

The welding power source 24 determines whether the welding instruction has been switched from the stitch pulse welding instruction to the non-stitch pulse welding instruction, as a non-stitch pulse initial process (SB5). If it is determined that the welding instruction has been switched to the non-stitch pulse welding instruction (at the time when a welding switch request is made, SB5, Y), the welding power source 24 further determines whether the non-stitch pulse welding process is implemented with the spiral weaving operation of the welding torch 21 (SB6). If it is determined that the non-stitch pulse welding process is implemented with the spiral weaving operation (SB6, Y), in order to quickly end the stitch pulse welding process, the welding power source 24 updates the welding conditions stored in the welding condition storage to welding conditions that correspond to the non-stitch pulse welding process.

If the welding-current starting step (a) or the welding-current applying step (b) of the stitch pulse welding process is still being carried out at the time when the welding switch request is made, the welding power source 24 immediately carries out the welding-current ending step (c). Then, after a predetermined time has passed, the welding power source 24 carries out the welding-current starting step (SB8) and the welding-current applying step (SB9), and quickly starts the non-stitch pulse welding process.

Alternatively, if another step of the stitch pulse welding process is stilled being carried out at the time when the welding switch request is made, the welding power source 24 carries out the welding-current starting step (SB8) and the welding-current applying step (SB9) when a predetermined time has passed after at least the welding-current ending step (c) ends, and quickly starts the non-stitch pulse welding process.

Here, the above-described "predetermined time" after the welding-current ending step ends may be the same length as or a different length from the time required for the welding-current suspending step. In order to quickly perform switching to the non-stitch pulse welding process, the above-described "predetermined time" is preferably shorter than the time required for the welding-current suspending step.

On the other hand, if it is determined in step SB6 that the non-stitch pulse welding process is implanted without the spiral weaving operation (SB6, N), the welding power source 24 carries out the step of ending the stitch pulse welding process while maintaining the welding conditions stored in the welding condition storage (SB7), and then updates the welding conditions stored in the welding condition storage to new welding conditions that correspond to the non-stitch pulse welding process, and carries out the welding-current starting step (SB8) and the welding-current applying step (SB9).

In the step of ending the stitch pulse process in step SB7, if the stitch pulse welding process is carrying out the welding-current applying step (b), after this step, the welding power source 24 carries out the welding-current ending step (c). Alternatively, if the stitch pulse welding process is carrying out the welding-current starting step (a), the welding-current ending step (c), or the welding-current suspending step (d), after any of the above steps, the welding power source 24 carries out the subsequent welding-current applying step (b), and then carries out the welding-current ending step (c).

When a predetermined time has passed after the welding-current ending step (c) performed in step SB7, the welding power source 24 carries out the welding-current starting step (SB8) and the welding-current applying step (SB9), and quickly starts the non-stitch pulse welding process. In this case as well, the above-described "predetermined time" may be the same length as or a different length from the time required for the welding-current suspending step. In order to quickly perform switching to the non-stitch pulse welding process, the above-described "predetermined time" is preferably shorter than the time required for the welding-current suspending step.

After that, the processing returns to step SB1, and, in the case where the non-stitch pulse welding process is continuously performed (SB3, non-stitch pulse), because the non-stitch pulse welding instruction is maintained as the welding instruction in step SB9 (SB5, N), the processing advances to step SB9, where the welding power source 24 continuously carries out the welding-current applying step.

On the other hand, if it is determined in step SB3 that the non-stitch pulse welding process has been switched to the stitch pulse welding process, in order to immediately end the non-stitch pulse welding process, the welding power source 24 carries out the welding-current ending step, and after a predetermined time has passed, carries out the stitch pulse welding process. In this case as well, the above-described "predetermined time" may be the same length as or a different length from the time required for the welding-current suspending step.

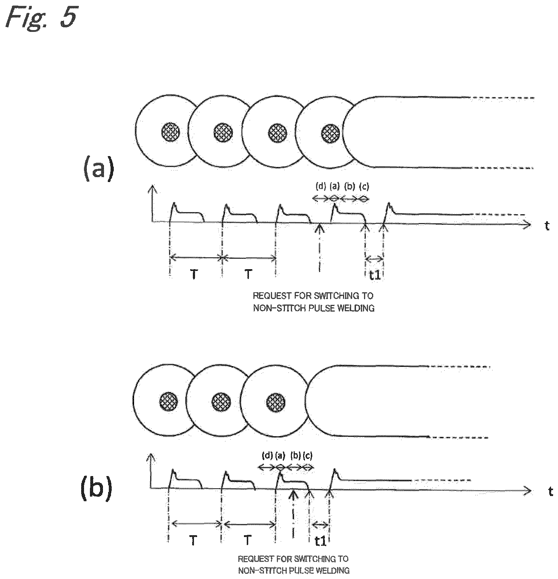

FIGS. 5(a) and 5(b) each show a bead shape and a current wave form that are formed when a switch instruction (welding switch request) to switch to the non-stitch pulse welding process without the weaving operation is output from the robot controller 12 to the welding power source 24 during the stitch pulse welding process.

FIG 5(a) shows a specific example of a bead shape and a current waveform when a switch instruction (welding switch request) is made during the welding-current suspending step (d). After the welding-current suspending step (d), the subsequent cycle including a) the welding-current starting step, b) the welding-current applying step, and c) the welding-current ending step is performed, and then when a predetermined time t1 has passed, the welding power source 24 carries out the non-stitch pulse welding process. With the arc welding system 1 of the present embodiment configured as described above, even if a switch instruction (welding switch request) is made during the welding-current suspending step (d), it is possible to suppress a significant variation in the bead shape (discontinuity of the bead shape).

FIG 5(b) shows a specific example of a bead shape and a current waveform when a switch instruction (welding switch request) is made during the welding-current applying step (b). When a predetermined time t1 has passed after the welding-current ending step (c) of the cycle, the welding power source 24 carries out the non-stitch pulse welding process. With the arc welding system 1 of the present embodiment configured as described above, even if a switch instruction (welding switch request) is made during the welding-current applying step (b), as above, it is possible to suppress a significant variation in the bead shape (discontinuity of the bead shape). Also, by further shortening the predetermined time t1, the continuity of the bead shape can be further improved. The up-down width of a bead formed in the non-stitch pulse welding process is determined according to the welding conditions, and may be different from the up-down width of a bead formed in the stitch pulse welding.

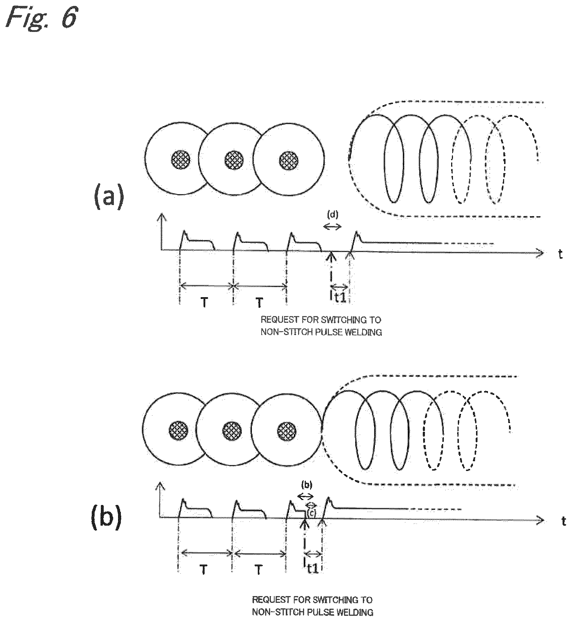

FIGS. 6(a) and 6(b) each show a bead shape and a current wave form that are formed when a switch instruction (welding switch request) to switch to the non-stitch pulse welding process that is implemented with a weaving operation is output from the robot controller 12 to the welding power source 24 during the stitch pulse welding process.

FIG 6(a) shows a specific example of a bead shape and a current waveform when a switch instruction (welding switch request) is made during the welding-current suspending step (d). When a predetermined short time t1 has passed after the switch instruction has been made, the welding power source 24 carries out the non-stitch pulse welding process with the spiral weaving operation. With the arc welding system 1 of the present embodiment configured as described above, priority is given to suppression of a significant variation in the welding strength, rather than suppression of a variation in the bead shape (discontinuity of the bead shape).

FIG 6(b) shows a specific example of a bead shape and a current waveform when a switch instruction (welding switch request) is made during the welding-current applying step (b). Immediately after the switch instruction, the welding power source 24 carries out the welding-current ending step (c), and after a predetermined time t1 has passed, the welding power source 24 carries out the non-stitch pulse welding. With the arc welding system 1 of the present embodiment configured as described above, as above, priority is given to suppression of a significant variation in the welding strength, rather than suppression of a variation in the bead shape (discontinuity of the bead shape). However, by further shortening the predetermined time t1, the non-stitch pulse welding process with the spiral weaving operation can be performed repeatedly on the welding base material of the bead that was formed last in the stitch pulse welding process, and thus a significant variation in the bead shape (discontinuity of the bead shape) can also be substantially suppressed.

In the embodiment given above, an example has been described in which the robot controller 12 and the power source controller 24B are configured as separate members. However, the robot controller 12 and the power source controller 24B may be configured as a unitary member.

In the embodiment given above, the stitch pulse welding process has been described as a process in which a) a welding-current starting step, b) a welding-current applying step, c) a welding-current ending step, and d) a welding-current suspending step are repeatedly carried out in series every predetermined period T, but a) the welding-current starting step, b) the welding-current applying step, and c) the welding-current ending step may be collectively referred to as a "welding current-on step".

The embodiment given above is summarized here. The arc welding system 1 of the present embodiment may be configured such that, at the time when a switch request for switching to the non-stitch pulse welding process without the spiral weaving operation is made, if the stitch pulse welding process is carrying out the welding current-on step, when a predetermined time has passed after the welding current-on step, the non-stitch pulse welding process is started, and if the stitch pulse welding process is carrying out the welding-current suspending step, the subsequent welding current-on step is carried out, and then when a predetermined time has passed, the non-stitch pulse welding process is started.

In the embodiment given above, as the weaving operation, a spiral weaving operation has been described in which welding is performed continuously by moving the welding torch 21 in a spiral manner, but the weaving operation is not limited to the spiral weaving operation, and the welding torch 21 may be moved in, for example, a zigzag manner, or in a direction that intersects the welding line. At this time, the pitch and the amplitude of the weaving operation are set to appropriate values.

In the embodiment given above, an example has been described in which welding is performed by intermittently generating an arc discharge while continuously moving the welding torch, which is a preferred aspect of the stitch pulse welding process for the arc welding method of the present invention to be applied. However, the present invention is also applicable to a welding process in which welding is performed by intermittently generating an arc discharge in synchronization with intermittent movement of the welding torch.

In the embodiment given above, an example has been described in which argon gas is used as the shield gas. However, other than argon gas, an inert gas such as helium gas, carbon dioxide gas, or the like can also be used as the shield gas.

The embodiment given above is merely an example of the present invention. Accordingly, specific configurations of the constituent units are not limited to the specific example given above, and can be modified or designed as appropriate within the scope of the present set of claims in which the advantageous effects of the present invention can be obtained.

### [Industrial Applicability]

According to the present invention, it is possible to provide an arc welding system, with which desired beads can be formed according to whether the weaving operation of the welding torch is implemented when the stitch pulse welding is switched to the non-stitch pulse welding.

### [Reference Signs List]

1: Arc Welding System
10: Robot Device
   11: Manipulator
   12: Robot Controller
      120: Operation Unit
      121: Communication Interface Circuit for Performing Communication with Teach Pendant
      122: Communication Interface Circuit for Performing Communication with Power Source Controller
20: Welding Device
   21: Welding Torch
   22: Consumable Electrode (Wire)
   23: Wire Supply Unit
      23A: Welding Wire
   24: Welding Power Source
      24A: High-Voltage Generating Circuit
      24B: Power Source Controller
30: Teach Pendant
   31: Communication Interface Circuit
   32: Display Unit
   33: Data Setting Unit
   40: Welding Target (Welding Base Material, Workpiece)

## Claims

1. An arc welding method, comprising:
implementing a stitch pulse welding process; and
implementing a non-stitch pulse welding process,
wherein upon switching from the stitch pulse welding process to the non-stitch pulse welding process, a switch timing from the stitch pulse welding process to the non-stitch pulse welding process is modified based upon whether the non-stitch pulse welding process is implemented with or without a weaving operation of a welding torch.

2. The arc welding method according to claim 1, wherein the stitch pulse welding process includes a welding-current starting step, a welding-current applying step, a welding-current ending step, and a welding-current suspending step, which are repeatedly carried out in series, and wherein
i) if a switch request for switching the stitch pulse welding process to the non-stitch pulse welding process with the weaving operation is made during the welding-current starting step or the welding-current applying step, the welding-current ending step is carried out immediately, and then after a predetermined time (t1) has passed, the non-stitch pulse welding process is implemented, and
ii) if the switch request for switching the stitch pulse welding process to the non-stitch pulse welding process with the weaving operation is made during the welding-current ending step or the welding-current suspending step, at least the welding-current ending step is completed, and then after a predetermined time (t1) has passed, the non-stitch pulse welding process is implemented.

3. The arc welding method according to claim 1, wherein the stitch pulse welding process includes a welding-current starting step, a welding-current applying step, a welding-current ending step, and a welding-current suspending step, which are repeatedly carried out in series, and wherein
iii) if a switch request for switching the stitch pulse welding process to the non-stitch pulse welding process without the weaving operation is made during the welding-current applying step, the subsequent welding-current ending step is completed, and then after a predetermined time (t1) has passed, the non-stitch pulse welding process is implemented, and
iv) if a switch request for switching the stitch pulse welding process to the non-stitch pulse welding process without the weaving operation is made during the welding-current starting step, the welding-current ending step, or the welding-current suspending step, the subsequent series of the welding-current starting step, the welding-current applying step, the welding-current ending step, and the welding-current suspending step are completed, and then after a predetermined time (t1) has passed, the non-stitch pulse welding process is implemented.

4. An arc welding system (1), comprising:
a welding torch (21) to which a consumable electrode (22) is supplied;
a welding power source (24) that applies a welding current to the welding torch (21);
a manipulator (11) that moves the welding torch (21) to a welding position; and
a robot controller (12) that controls the manipulator (11),
wherein the robot controller (12) is configured to control the manipulator (11) to move the welding torch (21) in accordance with a predetermined teaching information, and to output a switch request switching between a stitch pulse welding process and a non-stitch pulse welding process to the welding power source, and
wherein the welding power source (24) is configured, when receiving, from the robot controller (12), the switch request from the stitch pulse welding process to the non-stitch pulse welding process, to modify a switch timing from the stitch pulse welding process to the non-stitch pulse welding process based upon whether the non-stitch pulse welding process is implemented with or without a weaving operation of a welding torch.

5. The arc welding system (1) according to claim 4, wherein the stitch pulse welding process includes a welding-current starting step, a welding-current applying step, a welding-current ending step, and a welding-current suspending step, which are repeatedly carried out in series, and wherein
the welding power source (24) is configured,
i) if the switch request for switching the stitch pulse welding process to the non-stitch pulse welding process with the weaving operation is received during the welding-current starting step or the welding-current applying step, to carry out the welding-current ending step immediately, and then after a predetermined time (t1) has passed, to implement the non-stitch pulse welding process, and
ii) if the switch request for switching the stitch pulse welding process to the non-stitch pulse welding process with the weaving operation is received during the welding-current ending step or the welding-current suspending step, to complete at least the welding-current ending step, and then after a predetermined time (t1) has passed, to implement the non-stitch pulse welding process.

6. The arc welding system (1) according to claim 4, wherein the stitch pulse welding process includes a welding-current starting step, a welding-current applying step, a welding-current ending step, and a welding-current suspending step, which are repeatedly carried out in series, and wherein
the welding power source (24) is configured,
iii) if the switch request for switching the stitch pulse welding process to the non-stitch pulse welding process without the weaving operation is received during the welding-current applying step, to complete the subsequent welding-current ending step, and then after a predetermined time (t1) has passed, to implement the non-stitch pulse welding process, and
iv) if the switch request for switching the stitch pulse welding process to the non-stitch pulse welding process without the weaving operation is received during the welding-current starting step, the welding-current ending step, or the welding-current suspending step, to complete the subsequent series of the welding-current starting step, the welding-current applying step, the welding-current ending step, and the welding-current suspending step, and then after a predetermined time (t1) has passed, to implement the non-stitch pulse welding process.

7. A controller (24B) of a welding power source (24) which implements an arc welding method according to any one of claims 1 to 3.

## Patentansprüche

1. Lichtbogenschweißverfahren, das Folgendes umfasst:
Implementieren eines Impulsschweißprozesses mit Heftung und
Implementieren eines Impulsschweißprozesses ohne Heftung,
wobei nach Umschalten vom Impulsschweißprozess mit Heftung zum Impulsschweißprozess ohne Heftung ein Umschalttiming vom Impulsschweißprozess mit Heftung zum Impulsschweißprozess ohne Heftung darauf basierend modifiziert wird, ob der Impulsschweißprozess ohne Heftung mit oder ohne einen Pendelvorgang eines Schweißbrenners implementiert wird.

2. Lichtbogenschweißverfahren nach Anspruch 1, wobei der Impulsschweißprozess mit Heftung einen Schritt des Einschaltens eines Schweißstroms, einen Schritt des Anlegens eines Schweißstroms, einen Schritt des Ausschaltens eines Schweißstroms, einen Schritt des Aussetzens eines Schweißstroms beinhaltet, die in Folge wiederholt ausgeführt werden, und wobei
i) wenn eine Umschaltanforderung zum Umschalten des Impulsschweißprozesses mit Heftung zum Impulsschweißprozess ohne Heftung mit dem Pendelvorgang während des Schritts des Einschaltens des Schweißstroms oder des Schritts des Anlegens des Schweißstroms gemacht wird, der Schritt des Ausschaltens des Schweißstroms sofort ausgeführt wird und dann, nachdem eine vorbestimmte Zeit (t1) vergangen ist, der Impulsschweißprozess ohne Heftung implementiert wird, und
ii) wenn die Umschaltanforderung zum Umschalten des Impulsschweißprozesses mit Heftung zum Impulsschweißprozess ohne Heftung mit dem Pendelvorgang während des Schritts des Ausschaltens des Schweißstroms oder des Schritts des Aussetzens des Schweißstroms gemacht wird, mindestens der Schritt des Ausschaltens des Schweißstroms abgeschlossen wird und dann, nachdem eine vorbestimmte Zeit (t1) vergangen ist, der Impulsschweißprozess ohne Heftung implementiert wird.

3. Lichtbogenschweißverfahren nach Anspruch 1, wobei der Impulsschweißprozess mit Heftung einen Schritt des Einschaltens eines Schweißstroms, einen Schritt des Anlegens eines Schweißstroms einen Schritt des Ausschaltens eines Schweißstroms, einen Schritt des Aussetzens eines Schweißstroms beinhaltet, die in Folge wiederholt ausgeführt werden, und wobei
iii) wenn eine Umschaltanforderung zum Umschalten des Impulsschweißprozesses mit Heftung zum Impulsschweißprozess ohne Heftung ohne den Pendelvorgang während des Schritts des Anlegens des Schweißstroms gemacht wird, der nachfolgende Schritt des Ausschaltens des Schweißstroms abgeschlossen wird und dann, nachdem eine vorbestimmte Zeit (t1) vergangen ist, der Impulsschweißprozess ohne Heftung implementiert wird, und
iv) wenn eine Umschaltanforderung zum Umschalten des Impulsschweißprozesses mit Heftung zum Impulsschweißprozess ohne Heftung ohne den Pendelvorgang während des Schritts des Einschaltens des Schweißstroms, des Schritts des Ausschaltens des Schweißstroms oder des Schritts des Aussetzens des Schweißstroms gemacht wird, die nachfolgende Folge des Schritts des Einschaltens des Schweißstroms, des Schritts des Anlegens des Schweißstroms, und des Schritts des Aussetzens des Schweißstroms abgeschlossen wird und dann, nachdem eine vorbestimmte Zeit (t1) vergangen ist, der Impulsschweißprozess ohne Heftung implementiert wird.

4. Lichtbogenschweißsystem (1), das Folgendes umfasst:
einen Schweißbrenner (21), dem eine Verbrauchselektrode (22) zugeführt wird;
eine Schweißstromquelle (24), die dem Schweißbrenner (21) einen Schweißstrom zuführt;
einen Manipulator (11), der den Schweißbrenner (21) zu einer Schweißposition bewegt; und
eine Robotersteuerung (12), die den Manipulator (11) steuert,
wobei die Robotersteuerung (12) dazu ausgelegt ist, den Manipulator (11) derart zu steuern, dass sich der Schweißbrenner (21) gemäß vorbestimmten Lehrinformationen bewegt, und eine Umschaltanforderung zum Umschalten zwischen einem Impulsschweißprozess mit Heftung und einem Impulsschweißprozess ohne Heftung an die Schweißstromquelle auszugeben, und
wobei die Schweißstromquelle (24), wenn sie die Umschaltanforderung vom Impulsschweißprozess mit Heftung zum Impulsschweißprozess ohne Heftung von der Robotersteuerung (12) empfängt, dazu ausgelegt ist, ein Umschalttiming vom Impulsschweißprozess mit Heftung zum Impulsschweißprozess ohne Heftung darauf basierend zu modifizieren, ob der Impulsschweißprozess ohne Heftung mit oder ohne einen Pendelvorgang eines Schweißbrenners implementiert wird.

5. Lichtbogenschweißsystem (1) nach Anspruch 4, wobei der Impulsschweißprozess mit Heftung einen Schritt des Einschaltens eines Schweißstroms, einen Schritt des Anlegens eines Schweißstroms, einen Schritt des Ausschaltens eines Schweißstroms, einen Schritt des Aussetzens eines Schweißstroms beinhaltet, die in Folge wiederholt ausgeführt werden, und wobei
die Schweißstromquelle (24) zu Folgendem ausgelegt ist,
i) wenn die Umschaltanforderung zum Umschalten des Impulsschweißprozesses mit Heftung zum Impulsschweißprozess ohne Heftung mit dem Pendelvorgang während des Schritts des Einschaltens des Schweißstroms oder des Schritts des Anlegens des Schweißstroms empfangen wird, den Schritt des Ausschaltens des Schweißstroms sofort auszuführen und dann, nachdem eine vorbestimmte Zeit (t1) vergangen ist, den Impulsschweißprozess ohne Heftung zu implementieren, und
ii) wenn die Umschaltanforderung zum Umschalten des Impulsschweißprozesses mit Heftung zum Impulsschweißprozess ohne Heftung mit dem Pendelvorgang während des Schritts des Ausschaltens des Schweißstroms oder des Schritts des Aussetzens des Schweißstroms empfangen wird, mindestens den Schritt des Ausschaltens des Schweißstroms abzuschließen und dann, nachdem eine vorbestimmte Zeit (t1) vergangen ist, den Impulsschweißprozess ohne Heftung zu implementieren.

6. Lichtbogenschweißsystem (1) nach Anspruch 4, wobei der Impulsschweißprozess mit Heftung einen Schritt des Einschaltens eines Schweißstroms, einen Schritt des Anlegens eines Schweißstroms, einen Schritt des Ausschaltens eines Schweißstroms, einen Schritt des Aussetzens eines Schweißstroms beinhaltet, die in Folge wiederholt ausgeführt werden, und wobei
die Schweißstromquelle (24) zu Folgendem ausgelegt ist,
iii) wenn die Umschaltanforderung zum Umschalten des Impulsschweißprozesses mit Heftung zum Impulsschweißprozess ohne Heftung ohne den Pendelvorgang während des Schritts des Anlegens des Schweißstroms empfangen wird, den nachfolgenden Schritt des Ausschaltens des Schweißstroms abzuschließen und dann, nachdem eine vorbestimmte Zeit (t1) vergangen ist, den Impulsschweißprozess ohne Heftung zu implementieren, und
iv) wenn die Umschaltanforderung zum Umschalten des Impulsschweißprozesses mit Heftung zum Impulsschweißprozess ohne Heftung ohne die Pendelvorgang während des Schritts des Einschaltens des Schweißstroms, des Schritts des Ausschaltens des Schweißstroms oder des Schritts des Aussetzens des Schweißstroms empfangen wird, die nachfolgende Folge des Schritts des Einschaltens des Schweißstroms, des Schritts des Anlegens des Schweißstroms, des Schritts des usschalten des Schweißstroms und des Schritts des Aussetzens des Schweißstroms abzuschließen und dann, nachdem eine vorbestimmte Zeit (t1) vergangen ist, den Impulsschweißprozess ohne Heftung zu implementieren,

7. Steuerung (24B) einer Schweißstromquelle (24), die ein Lichtbogenschweißverfahren nach einem der Ansprüche 1 bis 3 implementiert.

## Revendications

1. Procédé de soudage à l'arc, comprenant :
la mise en œuvre d'un processus de soudage par impulsion en points ; et
la mise en œuvre d'un processus de soudage par impulsion non en points,
dans lequel lors du passage du processus de soudage par impulsion en points au processus de soudage par impulsion non en points, un moment de commutation du processus de soudage par impulsion en points au processus de soudage par impulsion non en points est modifié selon que le processus de soudage par impulsion non en points est mis en œuvre avec ou sans opération de tissage d'une torche de soudage.

2. Procédé de soudage à l'arc selon la revendication 1, dans lequel le processus de soudage par impulsion en points comporte une étape de début de courant de soudage, une étape d'application de courant de soudage, une étape de fin de courant de soudage et une étape de suspension de courant de soudage qui sont effectuées de manière répétée en série, et dans lequel
i) si une demande de commutation pour passer du processus de soudage par impulsion en points au processus de soudage par impulsion non en points avec opération de tissage est faite au cours de l'étape de début de courant de soudage ou de l'étape d'application de courant de soudage, l'étape de fin de courant de soudage est effectuée immédiatement, puis après qu'un temps (t1) prédéterminé s'est écoulé, le processus de soudage par impulsion non en points est mis en oeuvre, et
ii) si la demande de commutation pour passer du processus de soudage par impulsion en points au processus de soudage par impulsion non en points avec opération de tissage est faite au cours de l'étape de fin de courant de soudage ou de l'étape de suspension de courant de soudage, au moins l'étape de fin de courant de soudage est terminée, puis après qu'un temps (t1) prédéterminé s'est écoulé, le processus de soudage par impulsion non en points est mis en oeuvre.

3. Procédé de soudage à l'arc selon la revendication 1, dans lequel le processus de soudage par impulsion en points comporte une étape de début de courant de soudage, une étape d'application de courant de soudage, une étape de fin de courant de soudage et une étape de suspension de courant de soudage qui sont effectuées de manière répétée en série, et dans lequel
iii) si une demande de commutation pour passer du processus de soudage par impulsion en points au processus de soudage par impulsion non en points sans opération de tissage est faite au cours de l'étape d'application de courant de soudage, l'étape suivante de fin de courant de soudage est terminée, puis après qu'un temps (t1) prédéterminé s'est écoulé, le processus de soudage par impulsion non en points est mis en oeuvre, et
iv) si une demande de commutation pour passer du processus de soudage par impulsion en points au processus de soudage par impulsion non en points sans opération de tissage est faite au cours de l'étape de début de courant de soudage, de l'étape de fin de courant de soudage ou de l'étape de suspension de courant de soudage, la série suivante des étapes de début de courant de soudage, d'application de courant de soudage, de fin de courant de soudage et de suspension de courant de soudage sont terminées, puis après qu'un temps (t1) prédéterminé s'est écoulé, le processus de soudage par impulsion non en points est mis en œuvre.

4. Système de soudage à l'arc (1), comprenant :
une torche de soudage (21) à laquelle est fournie une électrode consommable (22) ;
une source de puissance de soudage (24) qui applique un courant de soudage à la torche de soudage (21) ;
un dispositif de manipulation (11) qui déplace la torche de soudage (21) vers une position de soudage ; et
un dispositif de commande de robot (12) qui commande le dispositif de manipulation (11),
dans lequel le dispositif de commande de robot (12) est configuré pour commander le dispositif de manipulation (11) afin de déplacer la torche de soudage (21) conformément à une information d'apprentissage prédéterminée, et pour délivrer à la source de puissance de soudage une demande de commutation pour passer entre un processus de soudage par impulsion en points et un processus de soudage par impulsion non en points, et
dans lequel la source de puissance de soudage (24) est configurée, lorsqu'elle reçoit du dispositif de commande de robot (12) la demande de commutation du processus de soudage par impulsion en points au processus de soudage par impulsion non en points, pour modifier un moment de commutation du processus de soudage par impulsion en points au processus de soudage par impulsion non en points selon que le processus de soudage par impulsion non en points est mis en œuvre avec ou sans opération de tissage d'une torche de soudage.

5. Système de soudage à l'arc (1) selon la revendication 4, dans lequel le processus de soudage par impulsion en points comporte une étape de début de courant de soudage, une étape d'application de courant de soudage, une étape de fin de courant de soudage et une étape de suspension de courant de soudage qui sont effectuées de manière répétée en série, et dans lequel
la source de puissance de soudage (24) est configurée,
i) si la demande de commutation pour passer du processus de soudage par impulsion en points au processus de soudage par impulsion non en points avec opération de tissage est reçue au cours de l'étape de début de courant de soudage ou de l'étape d'application de courant de soudage, pour effectuer l'étape de fin de courant de soudage immédiatement, puis après qu'un temps (t1) prédéterminé s'est écoulé, pour mettre en œuvre le processus de soudage par impulsion non en points, et
ii) si la demande de commutation pour passer du processus de soudage par impulsion en points au processus de soudage par impulsion non en points avec opération de tissage est reçue au cours de l'étape de fin de courant de soudage ou de l'étape de suspension de courant de soudage, pour terminer au moins l'étape de fin de courant de soudage, puis après qu'un temps (t1) prédéterminé s'est écoulé, pour mettre en œuvre le processus de soudage par impulsion non en points.

6. Système de soudage à l'arc (1) selon la revendication 4, dans lequel le processus de soudage par impulsion en points comporte une étape de début de courant de soudage, une étape d'application de courant de soudage, une étape de fin de courant de soudage et une étape de suspension de courant de soudage qui sont effectuées de manière répétée en série, et dans lequel
la source de puissance de soudage (24) est configurée,
iii) si la demande de commutation pour passer du processus de soudage par impulsion en points au processus de soudage par impulsion non en points sans opération de tissage est reçue au cours de l'étape d'application de courant de soudage, pour terminer l'étape suivante de fin de courant de soudage, puis après qu'un temps (t1) prédéterminé s'est écoulé, pour mettre en œuvre le processus de soudage par impulsion non en points, et
iv) si la demande de commutation pour passer du processus de soudage par impulsion en points au processus de soudage par impulsion non en points sans opération de tissage est reçue au cours de l'étape de début de courant de soudage, de l'étape de fin de courant de soudage ou de l'étape de suspension de courant de soudage, pour terminer la série suivante de l'étape de début de courant de soudage, l'étape d'application de courant de soudage, l'étape de fin de courant de soudage, et l'étape de suspension de courant de soudage, puis après qu'un temps (t1) prédéterminé s'est écoulé, pour mettre en œuvre le processus de soudage par impulsion non en points.

7. Dispositif de commande (24B) d'une source de puissance de soudage (24) qui met en œuvre un procédé de soudage à l'arc selon l'une des revendications 1 à 3.
